# EUROPEAN PATENT SPECIFICATION

(11) **EP 0 553 145 B1**
(45) Date of publication and mention of the grant of the patent: **28.12.1994**
(21) Application number: 91917703.0
(22) Date of filing: 10.10.1991
(51) Int. Cl.: B65D 43/06, B65D 43/10, B65D 43/04

(54) **NON RE-USABLE CONTAINER**
NICHTWIEDERVERWENDBARER BEHÄLTER
RECIPIENT D'EMBALLAGE NON REUTILISABLE

(30) Priority: 25.10.1990 GB 9023278
(43) Date of publication of application: 04.08.1993
(73) Proprietor: LUCAS INDUSTRIES PUBLIC LIMITED COMPANY, Solihull, West Midlands B91 3TX (GB)
(72) Inventor: RAI, Devinder, Vir 110 Carverhill Road, Buckinghamshire HP11 2UD (GB)
(74) Representative: Cook, Anthony John
(86) International application number: GB9101757
(87) International publication number: WO9207770

(56) References cited:
- EP-A- 0 132 386
- EP-A- 0 142 870
- EP-A- 0 147 507
- DE-A- 3 213 191
- US-A- 4 762 248

## Description

This invention relates to a non re-usable container.

There have been many proposals for tamperproof containers, or containers which when opened leave permanent evidence that they have been opened.

European Patent Application Serial No. 142 870 discloses a container (a box) which has a lid attachable to the box by forcing tongues through openings in the box, the tongues being profiled so that they cannot be withdrawn. The box is opened by breaking off the tongues at a line of weakness.

U.S. Patent No. 4,560,082 suggests a lid for a pilfer evident container and has an inverted U-section rim in which nests an inverted U-section lip of a container, the lid rim having at least one opening in the outer limb, the outer limb of the container lip and lid rim being continuous around the lid, with the former having an outwardly projecting portion which is received by the lid opening to prevent removal of the lid after application to the container, the lid being removable by rupturing the connection between that part of the lid outer limb in the path of which, in the direction of lid removal, lies the outwardly projecting portion of the container rim.

A problem recently encountered is that unscrupulous persons manufacture, or have manufactured for them, counterfeit engineering parts which resemble high quality engineering parts. These unscrupulous persons market these parts by re-using the genuine manufacturer's original packaging. It therefore would be desirable if there existed a readily-manufactured design of container which would be substantially impossible to re-use.

According to the present invention, there is provided a container having a base portion and a lid portion the base portion having apertures therein through which can be forced peripherally-spaced tongues attached to the lid portion, the tongues each having an enlarged portion so that they cannot be withdrawn, characterised in that the tongues are attached to the lid portion by a tear-away strip which extends around the periphery of the lid portion and in that each tongue has a groove or a rib and the associated aperture has a rib or groove, respectively, the rib and groove of the tongue and aperture being interlockable to retain the tongue in the aperture even after the tongue has been detached from the lid portion by use of the tear-away strip.

Because the tongues are left trapped in the apertures and because the lid portion is separated from the tongues, a counterfeiter cannot reuse the container to house a counterfeit version of the article packaged in the container by the genuine manufacturer.

Preferably, the base portion has an annular side wall and each aperture is defined between the side wall and a respective rim portion radially spaced from the side wall. The rim portions may be disposed radially inside or outside the side wall of the base portion. If disposed outside, the tops of the apertures may be spaced below the top edge of the side wall in order to provide some lateral stability for the tear-away strip.

Preferably, each tongue has a groove or a rib and the associated aperture has a rib or groove, respectively, the rib and groove of the tongue and aperture being interlockable to retain the tongue in the aperture even after the tongue has been detached from the lid portion by use of the tear-away strip. When each aperture is open at both its top and bottom, the interlocking tongue and rib prevent the tongue, after use of the tear-away strip, from being removed either upwardly or downwardly from the aperture.

Preferably, the rim portions are provided by a common, annular rim. In this arrangement, the rim portions are connected together and therefore strengthen each other.

In an advantageous embodiment of the invention, the main part of the lid portion or cap is of planar form, and the tongues extend perpendicularly from the lid portion.. The container base portion may be bounded by a peripheral wall of which the upper part is vertical and the lower part tapers inwardly towards the bottom. The upper and lower parts may be joined by a step.

The tongues each have a pair of grooves which define the tear-away strip. Below these preferably is located an outwardly-projecting rib, and below the rib is an outwardly projecting tang or barb, there being an inwardly-projecting tang or barb at or near the lower end of the tongue.

The rib may be of substantially rectangular cross-section, taken in a vertical plane through the tongue; and in which the lid portion preferably has four tongues extending downwardly substantially parallel to each other and preferably substantially equally spaced around the periphery of the lid portion.

The invention will be better understood from the following non-limiting description of examples thereof given with reference to the accompanying drawings, in which:-
Figure 1 is a plan view of one embodiment of a lid portion of a container according to the invention;
Figure 2 is a side elevation of the lid portion of Figure 1;
Figure 3 is a view of the lid portion looking in the direction "A" of Figure 1;
Figure 4 is a partial axial cross-section through the line IV-IV of Figure 1;
Figure 5 is a partial cross-section on an enlarged scale showing the structure of one of the tongues attached to the lid portion of Figure 1;
Figure 6 is a front elevation view of one example of container according to the present invention;
Figure 7 is a side elevation view, with a part in cross-section, of the container of Figure 6;
Figure 8 is a plan view of the container of Figure 7;
Figure 9 is a cross-section in an axial plane, on an enlarged scale, showing detail of the construction of one of the apertures in the base of the container;
Figure 10 is a view similar to Figure 9 but showing the interengagement between a tongue and the base portion of the container in a first closed condition of the container wherein the tongues are located externally of the container;
Figure 11 is a similar view but showing the lid separated from the container;
Figure 12 illustrates a second embodiment of the invention and is a view similar to Figures 9, 10 and 11 but showing the tongue located internally of the container; and
Figure 13 illustrates in a cross-section in a vertical plane a tongue according to a third embodiment of the invention.

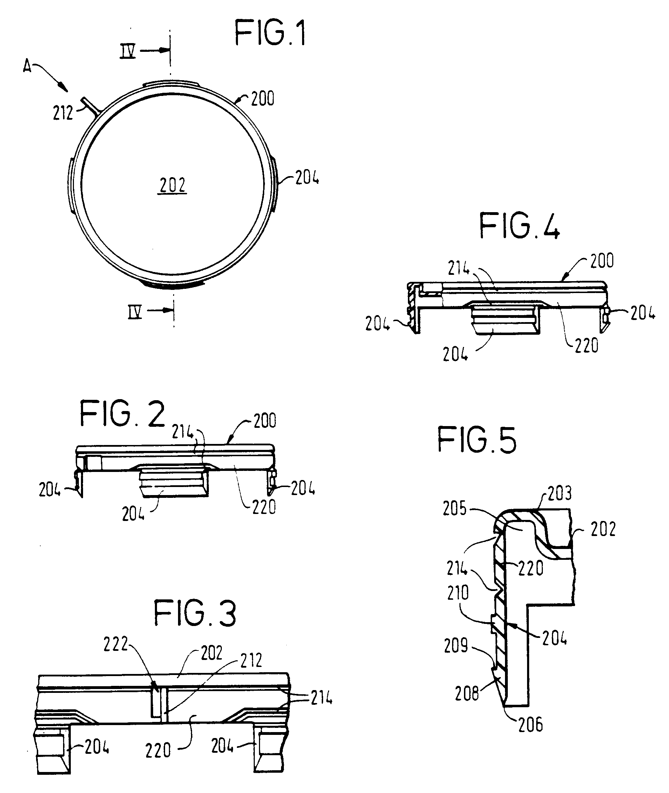

Referring firstly to Figures 1-5, the lid portion 200 of the container has a central region 202 and tongues 204. These parts are joined by an intervening portion 220 of the lid. Although the container and lid are illustrated as generally circular in this embodiment of the invention, this is not essential and containers of other configurations can equally well embody the present invention. While four tongues 204 are shown, it will also be appreciated by a man skilled in the art that any suitable number of tongues could be employed. In the case of a container having a large periphery, one might, for example, wish to employ 6, 8 or 10 tongues.

The radially outer portion of the lid is configured as shown at 203 to define a channel 205 which, in use, receives the upper end of the base portion of the container, as will be better understood from the succeeding description. The free end of each tongue is tapered as shown at 206 and has a barb or tang 208. Accordingly the end of the barb further from its tip, i.e. the upper end of the barb in the normal use position of the container, is defined by a step 209. Halfway along its length, each tongue is provided with a rib 210. This is preferably of substantially rectangular cross-section. Its purpose is to cooperate with and become engaged in a counterpart recess on the base portion of the container as will be later described.

Around the greater part of the periphery of the lid portion 200 is provided an upper weakening groove 214. At the top of each tongue 204, a lower weakening groove 214 is provided. The grooves 214 are constituted by grooves or channels which may be moulded in the lid portion during its manufacture. It will be understood that, in the most preferred embodiment of the invention, the lid portion and the base portion are moulded from a suitable synthetic plastics material, such as, for example polypropylene. These grooves 214 define the upper and lower boundaries of the intervening portion 220 of the lid portion, from which projects a tab 212 which can be manually gripped. This tab 212 is attached to or made integral with the intervening portion 220.

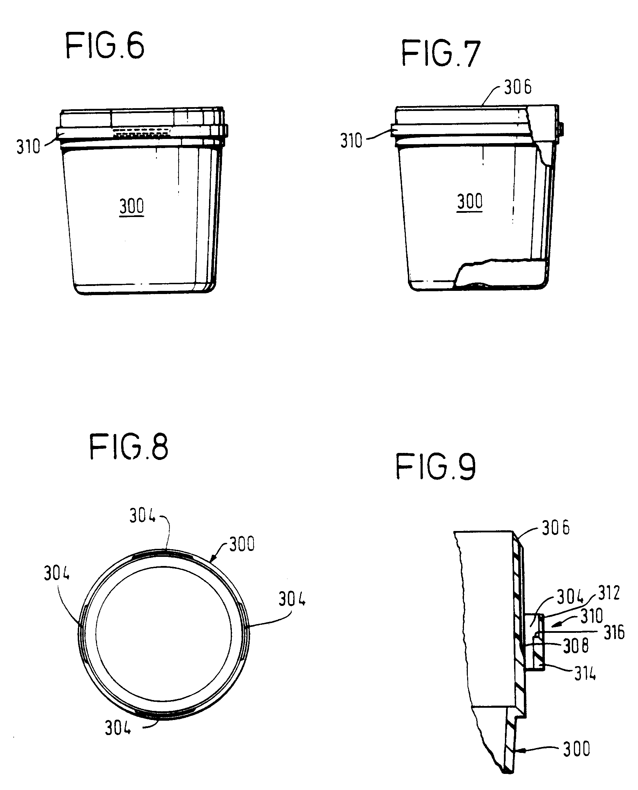

Referring now to Figures 6-9, the base portion 300 of the container is cup shaped, with a peripheral wall which tapers outwardly towards the top, the uppermost portion however being substantially cylindrical. Encircling the cylindrical portion of the base is a rim 310 which has through it a series of arcuate apertures. These apertures are indicated at 304 and four of them are shown, to correspond with the four tongues of the lid portion, but of course any suitable number of apertures 304 could be employed. Usually there will be one aperture in the body portion per tongue in the lid portion. The upper rim of the base portion 300 of the container is chamfered as shown at 306 in order to facilitate the fitting of the lid portion 200 onto the base portion 300. The outer surface of the upper part of the base 300 has a ramp surface 308 located in the region of or within the lower part of the aperture 304. This ramp 308 terminates at or near the lower end of the aperture 304.

In this description, the words "upper" and "lower" are used without limiting effect, and refer to the situation when a container according to the invention is placed upright with its base portion lowermost. Naturally it will be understood that the invention is not limited to any particular use position of the container and use of the words upper and lower for convenience of description herein is not to be taken as importing limitation into the scope of the invention.

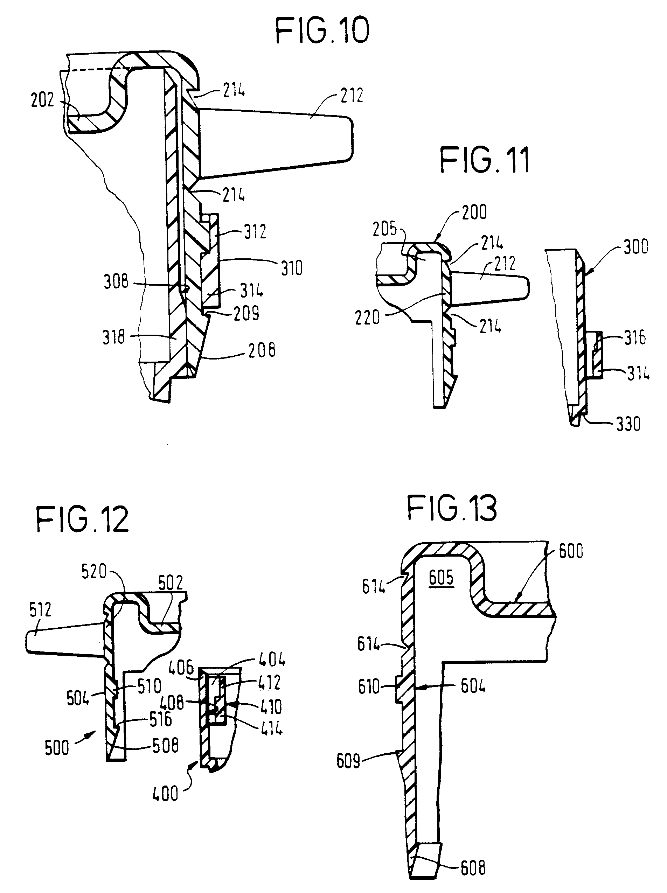

The rim 310 has a thin wall part 312 and a thicker wall part 314. In this way a step 316 part way down the height of the rim is provided. This step forms the lower boundary of a recess which, in use, receives the rectangular projecting rib 210 (Fig. 5) as seen best in Figure 10.

Use of the invention will now be described.

A product, for example an engineering part, which is to be packaged is placed within the base portion 300 of the container. Suitable cushioning or packing material is included if necessary. The lid portion 200 is then taken and brought towards the base portion in an axial direction, placing the two portions 200 and 300 in the correct position so that the tongues 204 enter the apertures 304. The lid portion is then progressively and firmly pushed downwardly, either manually or in automated packing operations, by a suitable plunger or pusher. In this operation the barb 208 is forced into and through the narrower portion of the aperture 304 defined by the rim wall 314 and the confronting part 318 of the base portion 300. The movement is terminated by the lower edge of the rib 210 coming into contact with the step 316 which is the boundary between wall portions 312 and 314. The step 209 defining the upper end of the barb 208 is then located just below the rim 310 and the configuration of the parts at this point, and the strength of the materials chosen, is such that the barb 208 cannot be withdrawn upwardly without rupturing the lid portion. In consequence, the lid portion is locked tightly onto the base portion and remains so during storage and transit.

The material of the intervening portion 220 extends almost completely around the container but is interrupted at one peripheral location, which is immediately adjacent to the tab 212. This interruption is best seen at 222 in Figure 3. When it is desired to obtain access to the product contained within the container, the tab 212 is grasped manually and pulled in the direction to the left as seen in Figure 3, causing the lines of weakening formed by the grooves 214 to break and permitting the intervening portion 220 to be pulled away progressively completely around the container. Because of the presence of the gap 222, the strip 220 is pulled completely free, leaving the lid unattached. Since the lines of weakening 214 extend completely across the width of each tongue 204, the lid 200 can be freely removed from the base portion 300 of the container, the tongues remaining locked within the respective apertures 304 of the base portion 300. As a consequence, the container cannot be reused because there is no practical method of refastening the lid 200 onto the base portion 300. Moreover, the presence of the tongues held within the rim on the base portion (in the embodiment of the present invention wherein the rim is on the exterior of the base portion) show to any person inspecting the container that it has been used. That is to say, it is demonstrated that the container is not in the condition in which it would be when leaving the factory containing a newly-packed original part or product. As a consequence, the present container has the advantage that it is, in practice, not usable by conterfeiters of the kind who seek to supply non-original counterfeit products within illicitly acquired original packaging.

Referring now to Figure 12, this illustrates a second embodiment of the invention. The embodiment of the invention shown in Figures 1-11 had the rim 310 located on the exterior of the base portion 300 of the container. In an alternative embodiment, shown in Figure 12, the rim 410 is located on the interior surface of the cylindrical portion of the base portion 400. As before, there is a chamfer at the upper edge, denoted 406, and the rim has a thicker wall part 414 and a thinner wall part 412. The lid portion 500 has a central region 502, an intervening portion 520, and a tab 512 which serve essentially the same functions as their counterparts already described in connection with Figures 1-11. The tongue 504 has a rib 510, a barb 508 and a step 516 all located on its radially inner surface rather than on its radially outer surface as was the case in the embodiment of Figures 1-11. With this embodiment of the invention, the lid 500 is placed on the base portion 400 with the tongues 504 located within the cylindrical upper part of the wall of the base portion 400. The barb 508 is inserted through the aperture 404 in a manner similar to that described above in connection with the first embodiment. In this embodiment of the invention, access to the product within the container can be obtained by separating the central region 502 from the tongues 504 by pulling the tab 512 and so tearing off the peripheral tear away strip 520. As before, this leaves the tongues permanently connected to the base portion 400 of the container since they are trapped within the rim 410 by the structure already described. Hence, the lid portion can be removed and the product used, but reuse of the container is not possible, because there is no practical method of refastening the lid portion on the container base portion.

An alternative design of tongue 604 is shown in Figure 13. The tongue 604 is similar to the tongue 204 of Figure 5 in having upper and lower weakening grooves 614, a rib (preferably of rectangular shape) 610, and an inwardly-directed barb or tang 608 at its lower end. The tongue 604 forms part of a cap 600 which is shaped to provide a channel 605 to receive the upper end of the container wall, similarly to the arrangement shown in Figure 10. The tongue 604 of Figure 13 also has a barb or tang 609 located intermediate the tang 608 and the rib 610, and outwardly directed, to interengage, in use, with the wall 314 of the container 300 shown in Figure 11. The tang 608, when the container 300 and the cap 600 are first fitted together to enclose the product, engages over the step 330 (Figure 11) of the container 300. This provides a second engagement or lock, additional to that provided by tang 609 engaging the lower edge of the rim 314, so increasing the security of attachment of the cap 600 to the container 300.

It will be seen that there has been particularly disclosed and illustrated an easily manufactured design of container which renders illicit re-use substantially impossible.

## Claims

1. A container having a base portion (300, 400) and a lid portion (200, 500, 600), the base portion having apertures (304, 404) therein through which can be forced peripherally-spaced tongues (204, 504, 604) attached to the lid portion, the tongues each having an enlarged portion so that they cannot be withdrawn, characterised in that the tongues are attached to the lid portion by a tear-away strip (220, 520) which extends around the periphery of the lid portion and in that each tongue has a groove or a rib (210, 510, 610) and the associated aperture has a rib or groove, respectively, the rib and groove of the tongue (204, 504, 604) and aperture being interlockable to retain the tongue (204, 504, 604) in the aperture even after the tongue has been detached from the lid portion (200, 500) by use of the tear-away strip (220, 520).

2. A container according to claim 1, wherein the base portion (300, 400) has an annular side wall and each aperture is defined between the side wall and a respective rim portion (310, 410) radially spaced from the side wall.

3. A container according to claim 2, wherein the rim portions (310) are disposed radially outside the side wall of the base portion.

4. A container according to claim 3, wherein the tops of the apertures (304) are spaced below the top edge (306) of the side wall of the base portion.

5. A container according to claim 2, wherein the rim portions (410) are disposed radially inside the side wall of the base portion (300).

6. A container according to any one of claims 2 to 5, wherein each aperture is open at both its top and bottom.

7. A container according to any one of claims 2 to 6, wherein the rim portions are provided by a common annular rim (310, 410).

8. A container according to any preceding claim wherein each tongue (204) has a pair of grooves (214) which define the tear-away strip (220), below which is located an outwardly-projecting rib (210), and below the rib is located an outwardly projecting tang or barb (208).

9. A container according to any preceding claim wherein each tongue (504) has a pair of grooves which define the tear-away strip (520), below which is located an inwardly-projecting rib (510), and below the rib is an inwardly projecting tang or barb (508) at or near the lower end of the tongue (504).

10. A container according to any preceding claim wherein each tongue has a pair of grooves (614) which define the tear-away strip, below which is located an outwardly-projecting rib (610), wherein below the rib is located an outwardly-projecting tang or barb (609), and wherein an inwardly-projecting tang or barb (608) is located at or near the lower end of the tongue (604).

11. A container according to claim 1, 8, 9 or 10 in which the rib (210, 510, 610) is of substantially rectangular cross-section, taken in a vertical plane through the tongue (204,504 or 604); and in which the lid portion has a plurality of tongues extending downwardly substantially parallel to each other and substantially equally spaced around the periphery of the lid portion (200, 500 or 600).

12. A container according to claim 11, in which the lid has four tongues.

## Patentansprüche

1. Behälter mit einem Basisteil (300, 400) und einem Deckelteil (200, 500, 600), wobei der Basisteil Öffnungen (304, 404) hat, durch welche am Umfang im Abstand angeordnete Zungen (204, 504, 604) gedrängt werden können, welche an dem Deckelteil angebracht sind, wobei die Zungen jeweils einen erweiterten Teil haben, so daß sie nicht zurückgezogen werden können, dadurch gekennzeichnet, daß die Zungen durch einen Wegreißstreifen (220, 520) an dem Deckelteil angebracht sind, wobei sich der Wegreißstreifen rund um den Umfang des Deckelteiles erstreckt, und dadurch, daß jede Zunge eine Nute oder Rippe (210, 510, 610) hat, und die zugeordnete Öffnung eine Rippe bzw. Nute hat, wobei die Rippe und Nute der Zunge (204, 504, 604) und die Öffnung gegenseitig verriegelbar sind, um die Zunge (204, 504, 604) in der Öffnung zurückzuhalten, sogar nachdem die Zunge von dem Deckelteil (200, 500) unter Benutzung des Wegreißstreifens (220, 520) von dem Deckelteil gelöst wurde.

2. Behälter nach Anspruch 1, wobei der Basisteil (300, 400) eine ringförmige Seitenwand hat und jede Öffnung zwischen der Seitenwand und einem entsprechenden Randteil (310, 410) bestimmt ist, der radial im Abstand von der Seitenwand angeordnet ist.

3. Behälter nach Anspruch 2, wobei die Randteile (310) radial außerhalb der Seitenwand des Basisteiles angeordnet sind.

4. Behälter nach Anspruch 3, wobei die oberen Teile der Öffnungen (304) unterhalb der oberen Kante (306) der Seitenwand des Basisteiles im Abstand angeordnet sind.

5. Behälter nach Anspruch 2, wobei die Randteile (410) radial innerhalb der Seitenwand des Basisteiles (300) angeordnet sind.

6. Behälter nach einem der Ansprüche 2 bis 5, wobei jede Öffnung sowohl an ihrer Oberseite und Boden offen ist.

7. Behälter nach einem der Ansprüche 2 bis 6, wobei die Randteile durch einen gemeinsamen ringförmigen Rand (310, 410) geschaffen sind.

8. Behälter nach einem der vorangegangenen Ansprüche, wobei jede Zunge (204) ein Paar Nuten (214) hat, welche den Wegreißstreifen (220) definieren, unter welchem eine nach außen vorspringende Rippe (210) angeordnet ist und unter der Rippe ein nach außen vorspringender Mitnehmer oder Haken (208) angeordnet ist.

9. Behälter nach einem der vorangegangenen Ansprüche, wobei jede Zunge (504) ein Paar von Nuten hat, welche den Wegreißstreifen (520) bestimmen, unter welchem eine nach innen vorspringende Rippe (510) angeordnet ist, und wobei unter der Rippe sich ein nach innen vorspringender Mitnehmer oder Haken (508) an oder nahe dem unteren Ende der Zunge (504) befindet.

10. Behälter nach einem der vorangegangenen Ansprüche, wobei jede Zunge ein Paar von Nuten (614) hat, welche den Wegreißstreifen bestimmen, unter welchem eine nach außen vorspringende Rippe (610) angeordnet ist, wobei unterhalb der Rippe ein nach außen vorspringender Mitnehmer oder Haken (609) angeordnet ist und wobei ein nach innen vorspringender Mitnehmer oder Haken (608) an oder nahe dem unteren Ende der Zunge (604) angeordnet ist.

11. Behälter nach Anspruch 1, 8, 9 oder 10, wobei die Rippe (210, 510, 610) entlang einer vertikalen Ebene durch die Zunge (204, 504 oder 604) einen im wesentlichen rechtwinkligen Querschnitt hat, und bei dem der Deckelteil eine Vielzahl von Zungen hat, welche sich nach unten im wesentlichen parallel zueinander und im wesentlichen in gleichem Abstand rund um den Umfang des Deckelteiles (200, 500 oder 600) erstrecken.

12. Behälter nach Anspruch 11, bei welchem der Deckel vier Zungen hat.

## Revendications

1. Récipient ayant une partie de base (300, 400) et une partie couvercle (200, 500, 600), la partie de base ayant des ouvertures (304, 404) dans lesquelles peuvent être engagées à force des languettes espacées sur la périphérie (204, 504, 604) attachées à la partie couvercle, les languettes ayant chacune une partie élargie de sorte qu'elles ne peuvent pas être retirées, caractérisé en ce que les languettes sont attachées à la partie couvercle par une bande à déchirer (220, 520) qui s'étend autour de la périphérie de la partie couvercle et en ce que chaque languette a une gorge ou une nervure (210, 510, 610) et que l'ouverture associée a, respectivement, une nervure ou une gorge, la nervure et la gorge de la languette (204, 504, 604) et de l'ouverture s'enclenchant pour retenir la languette (204, 504, 604) dans l'ouverture, même après la séparation de la languette de la partie couvercle (200, 500) par l'utilisation de la bande à déchirer (220, 520).

2. Récipient selon la revendication 1, dans lequel la partie de base (300, 400) possède une paroi latérale annulaire, et chaque ouverture s'inscrit entre la paroi latérale et une partie de cerclage respectif (310, 410) espacée radialement de la paroi latérale.

3. Récipient selon la revendication 2, dans lequel les parties de cerclage (310) sont disposées radialement à l'extérieur de la paroi latérale de la partie de base.

4. Récipient selon la revendication 3, dans lequel les hauts des ouvertures (304) sont placés à distance au-dessous du bord supérieur (306) de la paroi latérale de la partie de base.

5. Récipient selon la revendication 2, dans lequel les parties de cerclage (410) sont disposées radialement à l'intérieur de la paroi latérale de la partie de base (300).

6. Récipient selon l'une quelconque des revendications 2 à 5, dans lequel chaque ouverture est ouverte à la fois par le haut et par le bas.

7. Récipient selon l'une quelconque des revendications 2 à 6, dans lequel les parties de cerclage sont intégrées dans un cerclage annulaire commun (310, 410).

8. Récipient selon l'une quelconque des revendications précédentes, dans lequel chaque languette (204) possède une paire de gorges (214) qui définit une bande à déchirer (220), au-dessous de laquelle est située une nervure en saillie vers l'extérieur (210), et au-dessous de la nervure est situé un tenon ou ardillon se projetant vers l'extérieur (208).

9. Récipient selon l'une quelconque des revendications précédentes, dans lequel chaque languette (504) possède une paire de gorges qui définit une bande à déchirer (520), au-dessous de laquelle est située une nervure en saillie vers l'intérieur (510), et au-dessous de la nervure est situé un tenon ou ardillon se projetant vers l'intérieur (508) à la partie inférieure ou près de la partie inférieure de la languette (504).

10. Récipient selon l'une quelconque des revendications précédentes, dans lequel chaque languette possède une paire de gorges (614) qui définit une bande à déchirer, au-dessous de laquelle est située une nervure en saillie vers l'extérieur (610), dans lequel, au-dessous de la nervure, est situé un tenon ou ardillon (609) se projetant vers l'extérieur, et dans lequel un tenon ou ardillon (608)se projetant vers l'intérieur est situé à la partie inférieure ou près de la partie inférieure de la languette (604).

11. Récipient selon l'une des revendications 1, 8, 9 ou 10, dans lequel la nervure (210, 510, 610) est de forme sensiblement rectangulaire en coupe transversale, prise dans un plan vertical traversant la languette (204, 504, ou 604); et dans lequel la partie couvercle possède une pluralité de languettes s'étendant vers le bas sensiblement parallèles les unes aux autres et sensiblement également espacées le long de la périphérie de la partie couvercle (200, 500, 600).

12. Récipient selon la revendication 11, dans lequel le couvercle a quatre languettes.
